# EUROPEAN PATENT APPLICATION

(11) **EP 1 693 796 A2**
(43) Date of publication of application: **23.08.2006**
(21) Application number: 06003112.7
(22) Date of filing: 16.02.2006
(51) Int. Cl.: G06Q 30/00

(54) **Order support system, server, method, and program**

(30) Priority: 18.02.2005 JP 2005041609
(71) Applicant: NEC Corporation, Minato-ku Tokyo (JP)
(72) Inventor: Matsuzawa, Tadashi, Tokyo (JP); Hirano, Katsuya, Tokyo (JP)
(74) Representative: Vossius & Partner

(57) **Abstract**

At access from the orderer terminal, an order support server sends to the orderer terminal an order input form to order a concealing item to conceal a radio base station of cellulars. Upon receipt of order information from the orderer terminal, the information including the order input form containing at least orderer information, environmental conditions regarding a radio base station of cellular phones and an item name of the radio base station, and image data being attached thereto and showing an installation state of the radio base station, the order support server selects a designing maker according to the item name of the radio base station in the order information. The order support server then transmits the order information to the order receiver terminal of the designing maker thus selected. Therefore, the business area manager can easily order a concealing item of a radio base station of cellular phones.

## Description

The present invention relates to an order support system, an order support server, an order support method, and an order support program for a concealing item to conceal a radio base station of cellular phones.

With recent development of a radio Internet Protocol (IP) router and a radio Local Area Network (LAN), radio base stations for cellular phones have been increasingly installed uncovered at public places such as streets, stores, and offices.

Today, it has become general to concern the appearance of business areas such as a store or an office. In this situation, it is feared that a radio base station of cellulars installed in a business area would spoil the scenery of the business area and hence a precious business chance might be lost.

To overcome the difficulty in the business area in which a radio base station is installed for cellulars, a concealing item such as a cover of the base station is employed to hide the base station so that the base station covered with the concealing item matches with the fine view or beauty of the business area.

However, radio base stations of cellular phones are to be arranged in quite a large number of places. However, to store for each area various concealing items suitable to each sight of areas is not favorable from an inventory management point of view.

In addition, there has not been a convenient method for a manager of an area in which a radio base station is installed to order concealing items matching with the sight of the area. At present, the manager requests the concealing items through many dealers and/or makers. This causes a time lag and the concealing items, i.e., the covers received from a dealer may happen to differ from what the area manager has desired. As a related art document, Japanese Patent Application Laid-Open No. 2002-222325 may be took up.

It is therefore an object of the present invention to provide a technique for a manager of a business area to easily order a concealing item for a radio base station of cellular phones.

In accordance with a first aspect of the present invention, there is provided an order support system including an orderer terminal to be operated by an area manager of a business area, an order receiver terminal to be operated by a designing maker which designs and produces a concealing item to conceal a radio base station of cellular phones, and an order support server connected via a network to the orderer terminal and the order receiver terminal, the orderer terminal including a reader section to read image data, the order support server including a storage section for storing therein at least an order input form to order a concealing item and a corresponding table of a correspondence between an item name of a radio base station and a designing maker, and a control section. The control section executes processing in which the order input form is sent to the orderer terminal at access from the orderer terminal, processing in which upon receipt of order information from the orderer terminal, the information including the order input form containing at least orderer information, environmental conditions regarding a radio base station of cellular phones and an item name of the radio base station, and image data being attached thereto and showing an installation state of the radio base station, a designing maker is selected according to the item name of the radio base station in the order information, and processing in which the order information is transmitted to the order receiver terminal of the selected designing maker.

In accordance with a second aspect of the present invention, there is provided an order support server connected via a network to an orderer terminal to be operated by an area manager of a business area and to an order receiver terminal to be operated by a designing maker which designs and produces a concealing item to conceal a radio base station of cellular phones. The server includes a storage section for storing therein at least an order input form to order a concealing item and a corresponding table of a correspondence between an item name of a radio base station and a designing maker, and a control section. The control section executes processing in which the order input form is sent to the orderer terminal at access from the orderer terminal, processing in which upon receipt of order information from the orderer terminal, the information including the order input form containing at least orderer information, environmental conditions regarding a radio base station of cellular phones and an item name of the radio base station, and image data being attached thereto and showing an installation state of the radio base station, a designing maker is selected according to the item name of the radio base station in the order information, and processing in which the order information is transmitted to the order receiver terminal of the selected designing maker.

In accordance with a third aspect of the present invention, there is provided an order support method of supporting an area manager of a business area to order a concealing item, by use of an order support server connected via a network to an orderer terminal to be operated by the area manager and to an order receiver terminal to be operated by a designing maker which designs and produces a concealing item to conceal a radio base station of cellular phones. The method includes the steps of transmitting from the order support server, at access from the orderer terminal, an input form to order a concealing item to conceal a radio base station of cellular phones to the orderer terminal; selecting a designing maker by the order support server, upon receipt of order information from the orderer terminal, the information including the order input form containing at least orderer information, environmental conditions regarding a radio base station of cellular phones and an item name of the base station, and image data being attached thereto and showing an installation state of the radio base station, the designing maker being selected according to the item name of the radio base station in the order information; and transmitting the order information from the order support server to the order receiver terminal of the selected designing maker.

In accordance with the fourth aspect of the present invention, a computer program product is embodied on a computer-readable medium and comprises code that, when executed, causes a server (the order support server) to perform the order support method.

In accordance with the present invention, the area manager can easily order a concealing item such as a cover matching the good view of the business area. It is not necessary for the designing maker to store concealing items and hence can keep a good state for inventory management.

The objects and features of the present invention will become more apparent from the consideration of the following detailed description taken in conjunction with the accompanying drawings in which:
Fig. 1 is a schematic block diagram showing a configuration of an order support system in accordance with a first embodiment;
Fig. 2 is a flowchart schematically showing operation of an order support system in accordance with the first embodiment; and
Fig. 3 is a diagram schematically showing a flow of operation from a concealing item order planning stage to complete delivery of concealing items.

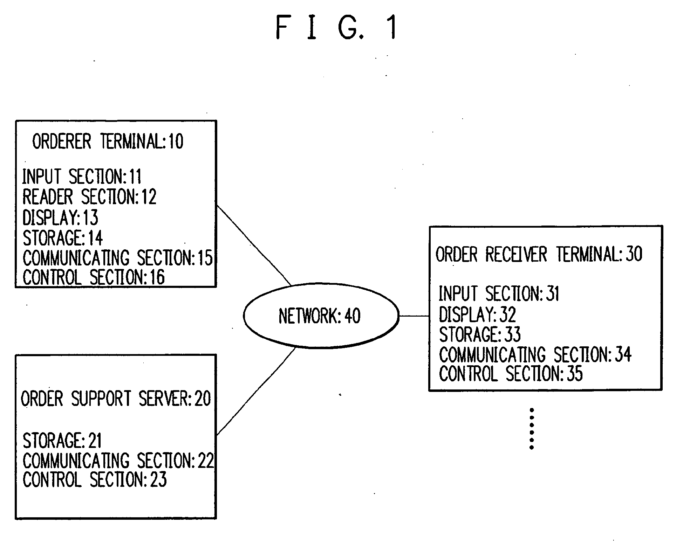

Referring next to the drawings, description will be given of a first embodiment of an order support system in accordance with the present invention. FIG. 1 schematically shows a configuration of the first embodiment of an order support system in a block diagram.

The system is provided to support an area manager or an orderer of a business area, e.g., streets, stores, offices, or station premises to issue an order to a designing maker, i.e., a designing maker or an order receiver of a concealing item, for example, a cover or a partition to conceal a radio base station of cellular phones. The order support system includes an orderer terminal 10, an order support server 20, an order receiver terminal 30, and a network 40.

The orderer terminal 10 is a computer terminal unit operated by the area manager of a business area to issue an order. The terminal 10 is communicably linked with a network 40 and includes an input section 11, a reader section 12, a display 13, a storage section 14, a communicating section 15, and a control section 16. The input section 11 is a module such as a keyboard, a mouse, or the like that conducts input operations. The reader module 12 is disposed to read image data from imaging devices such as a digital camera and a scanner. The display 13 is arranged to display predetermined information. The storage section 14 stores information including image data obtained by the reader 12. The communicating module 14 communicates information with a network 40. The control section 16 controls operation of the constituent components 11 to 15.

The order support server 20 is a computer server under control of an administrator who operates the order support site. The server is communicably coupled with the network 40 and includes a storage section 21, a communication section 22, and a control section 23. The storage section 21 stores information items including programs, home page screens of order support sites, contents, samples of concealing items, sizes thereof, estimated prices thereof, an order input form, orderer information (e.g., a contact address of an orderer), and a designing maker corresponding to an item name of a radio base station. The communicating section 22 communicates information with the network 40. The control section 23 controls operation of the respective elements 21 and 22.

The order receiver terminal 30 is a computer terminal operated by the order receiver, i.e., the designing maker who designs and produces a concealing item to conceal the radio base station of cellulars. The terminal 30 is communicably linked with the network 40 and includes an input section 31, a display 32, a storage section 33, a communicating section 34, and a controller 35. The input section 31 is a device such as a keyboard or a mouse to conduct input operations. The display 32 displays predetermined information. The storage section 33 stores programs and information data of the designed concealing item. The communicating section 34 is disposed to communicate information with the network 40. The control section 35 controls the components 31 to 34 according to a program.

The network 40 is an information network such as a wire communication line or a radio communication line.

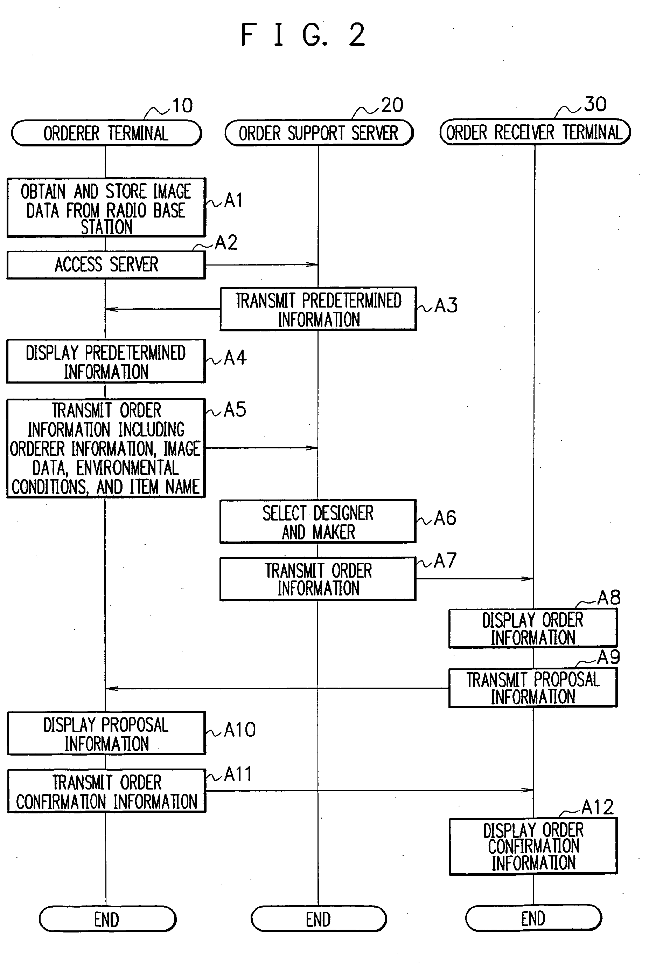

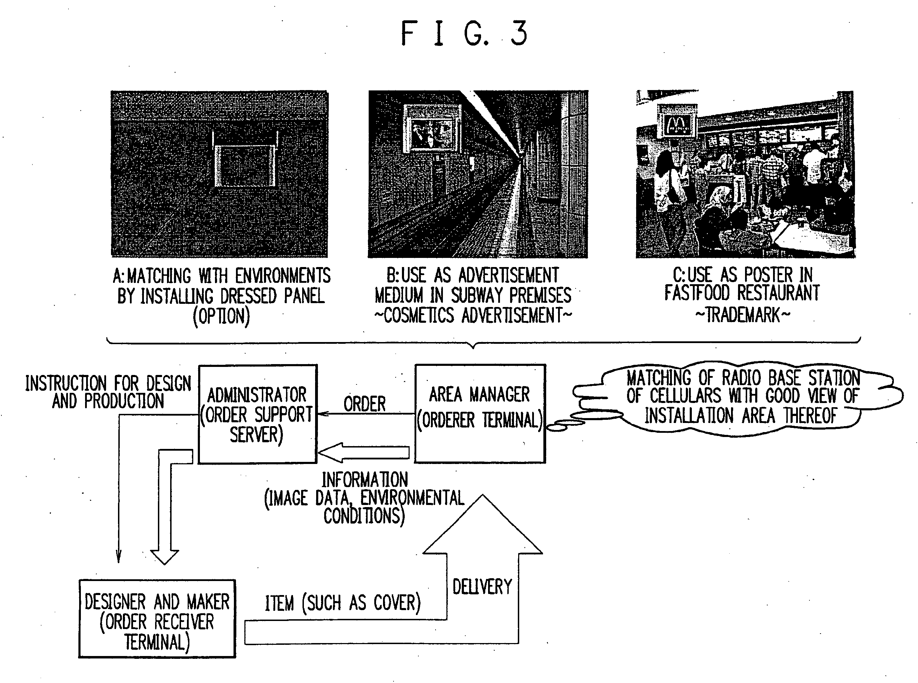

Description will next be given of an operation of the first embodiment of an order support system by referring to the drawings. Fig. 2 is a flowchart schematically showing an operation of the first embodiment. Fig. 3 shows in a schematic diagram a flow of operation from a concealing item order planning stage to completion of delivery of items.

The area manager first observes an installation site of a radio base station of cellular phones in which a concealing item is employed to match with beauty of the environment of the base station, for example, as below. When the concealing item is installed for the radio base station in a building, it is required that the color thereof matches with those of areas in its periphery such as a wall and a ceiling inside the building as indicated by A of FIG. 3. When the concealing item is arranged in subway premises, the item may be used as an advertising medium as can be seen from B of FIG. 3. When the covering item is adopted in a fast-food restaurant, the item is, for example, a signboard (trademark) as shown in C of FIG. 3. While observing the installation site, the manager records the installation state of the radio base station by, e.g., a digital camera. The manager also writes environmental conditions regarding the base station on a sheet of paper, such as "the base station is exposed to direct rays of the sun" and/or "the base station is in a humid place and gets easily wet with waterdrops".

The manager operates the orderer terminal 10 to read image data of the installation state of the radio base station recorded by the digital camera and then stores the image data therein (step A1).

The area manager accesses the order support server 20 from the terminal 10 (step A2). In response to the access from the terminal 10, the server 20 sends to the terminal 10 predetermined information including a home page screen of an order support site, contents, concealing item samples, sizes, estimated prices, and an order input form (step A3).

When the home page screen of an order support site, contents, concealing item samples, sizes, estimated prices, and an order input form are received from the order support server 20, the orderer terminal 10 displays the information items (step A4). By visually checking the items displayed on the terminal 10, the manager checks the contents of concealing items to thereafter fill an order input form with predetermined information items.

The area manager operates the terminal 10 to input own information items such as a name, an address, and a telephone number of his or her firm in the order input form, environmental conditions of the radio base station, and an item name of the radio base station. The terminal 10 resultantly creates order information including the information items with data attached thereto, i.e., the image data of the installation state of the base station and transmits the order information to the server 20 (step A5).

When the order information is received from the ordering terminal 10, the server 20 reads the item name of the base station from the information to selects a designing maker corresponding to the item name (step A6). Next, the server 20 sends order information to the receiver terminal 30 of the designing maker selected as above (step A7).

After having received the order information from the order support server 20, the receiver terminal 30 displays the information (step A8). The designing maker confirms the contents of the order information displayed on the receiver terminal 30 and selects a type of the concealing item most suitable for the beauty of the installation place on the basis of the environmental conditions and the item name of the radio base station. The designing maker then determines a color and design of the concealing item. In the operation, the designing maker also gives consideration to the environmental conditions that "the base station is exposed to direct rays of the sun" or " the base station likely gets wet with waterdrops" like that contained in the order information. After the concealing item is completely designed, the designing maker operates the receiver terminal 30 to create proposal information including the type of concealing item, the color, the design, and the estimated price and send the information to the orderer terminal 10 (step A9). That is, before starting production of the concealing item, the designing maker presents the type of concealing item, the color, the design, and the estimated price to the area manager.

When the proposal information is received from the receiver terminal 30, the orderer terminal 10 displays the information (step A10). By confirming the proposal information, the area manager determines whether to issue an order of concealing items according to the type of concealing item, the color, the design, and the estimated price contained in the information. If it is desired to modify or to change any information item of the proposal information, the manager transmits a message of modification from the orderer terminal 10 to the receiver terminal 30. Thereafter, the manager receives second proposal information reflecting the modification.

When it is desired to determine the order according to the contents of the proposal information (the second proposal information depending on cases), the area manager delivers order determining information to the receiver terminal 30 to issue the order on the basis of the information items of the proposal information (step A11).

When the order determining information is received from the orderer terminal 10, the receiver terminal 30 displays the information (step A12). The designing maker produces the concealing item according to the contents of the proposal information associated with the order determining information. After the concealing item is produced, the designing maker delivers the products to the area manager and submits a bill for the concealing item thereto. The manager pays the bill and installs the concealing item for the radio base station of cellular phones. Resultantly, the manager can appropriately match the concealing item with the good view of the area in which the radio base station is installed.

The first embodiment makes it possible for the area manager to easily order a concealing item such as a cover suitable for the fine scenery of the business area in a short period of time. Moreover, it is not required for the designing maker to keep concealing items in stock. This advantageously leads to good stock management. Since the installation of a radio base station in an area does not impair the good view of the area, the area manager can assuredly catch a business chance to sell a radio base station of cellulars. Also, for each of quite a large number of installation environments of a radio base station of cellulars, there can be constructed a business system to match the radio base station with the fine view of the associated installation environment. This results in improvement of an added value of the radio base station of cellular phones.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. An order support system, comprising:
an orderer terminal to be operated by an area manager of a business area;
an order receiver terminal to be operated by a designing maker which designs and produces a concealing item to conceal a radio base station of cellular phones; and
an order support server connected via a network to the orderer terminal and the order receiver terminal,
wherein
the orderer terminal including a reader section to read image data,
the order support server including
a storage section for storing therein at least an order input form to order a concealing item and a corresponding table of a correspondence between an item name of a radio base station and a designing maker and
a control section to execute processing in which the order input form is sent to the orderer terminal at access from the orderer terminal,
processing in which receiving from the orderer terminal the order information including the order input form containing at least orderer information, environmental conditions regarding a radio base station of cellular phones and an item name of the radio base station, and image data being attached thereto and showing an installation state of the radio base station, a designing maker is selected according to the item name of the radio base station in the order information, and
processing in which the order information is transmitted to the order receiver terminal of the selected designing maker.

2. An order support server connected via a network to an orderer terminal to be operated by an area manager of a business area and to an order receiver terminal to be operated by a designing maker which designs and produces a concealing item to conceal a radio base station of cellular phones, comprising:
a storage section for storing therein at least an order input form to order a concealing item and a corresponding table of a correspondence between an item name of a radio base station and a designing maker; and
a control section to execute processing in which the order input form is sent to the orderer terminal at access from the orderer terminal,
processing in which receiving from the orderer terminal the order information including the order input form containing at least orderer information, environmental conditions regarding a radio base station of cellular phones and an item name of the radio base station, and image data being attached thereto and showing an installation state of the radio base station, a designing maker is selected according to the item name of the radio base station in the order information, and
processing in which the order information is transmitted to the order receiver terminal of the selected designing maker.

3. An order support method of supporting an area manager of a business area to order a concealing item by use of an order support server connected via a network to an orderer terminal to be operated by the area manager and to an order receiver terminal to be operated by a designing maker which designs and produces a concealing item to conceal a radio base station of cellular phones, comprising the steps of:
transmitting from the order support server, at access from the orderer terminal, an input form to order a concealing item to conceal a radio base station of cellular phones to the orderer terminal;
selecting a designing maker by the order support server, upon receipt of order information from the orderer terminal, the information including the order input form containing at least orderer information, environmental conditions regarding a radio base station of cellular phones and an item name of the base station, and image data being attached thereto and showing an installation state of the radio base station, where the designing maker is selected according to the item name of the radio base station in the order information, and
transmitting the order information from the order support server to the order receiver terminal of the selected designing maker.

4. An order support program embodied on a computer-readable medium to support by an order support server an area manager of a business area to order a concealing item to conceal a radio base station of cellular phones, the server being connected via a network to an orderer terminal to be operated by the area manager and to an order receiver terminal to be operated by a designing maker which designs and produces a concealing item to conceal a radio base station of cellular phones, comprising code that, when executed, causes the server to perform the following:
transmitting from the order support server, at access from the orderer terminal, an input form to order a concealing item to conceal a radio base station of cellular phones to the orderer terminal;
selecting a designing maker by the order support server, upon receipt of order information from the orderer terminal, the information including the order input form containing at least orderer information, environmental conditions regarding a radio base station of cellular phones and an item name of the base station, and image data being attached thereto and showing an installation state of the radio base station, where the designing maker is selected according to the item name of the radio base station in the order information, and
transmitting the order information from the order support server to the order receiver terminal of the selected designing maker.
